# DEMANDE DE BREVET EUROPEEN

(11) **EP 1 538 301 A1**
(43) Date de publication de la demande: **08.06.2005**
(21) Numéro de dépôt: 04292813.5
(22) Date de dépôt: 29.11.2004
(51) Int. Cl.: E21B 43/267, E21B 33/138

(54) **Méthode et composition pour remédier aux pertes de fluides en cours de forage**

(30) Priorité: 05.12.2003 FR 0314360
(71) Demandeur: Institut Français du Pétrole, 92852 Rueil Malmaison Cédex (FR)
(72) Inventeur: Lecolier, Eric, 92370 Chaville (FR); Herzhaft, Benjamin, 92150 Suresnes (FR); Rousseau, Lionel, 78440 Issou (FR)

(57) **Abrégé**

La présente invention concerne une méthode pour colmater des zones à pertes en cours de forage, dans laquelle on effectue les étapes suivantes:
- on prépare un fluide aqueux comprenant en solution:
   ■ un copolymère acrylamide/acrylate,
   ■ une quantité utile de réticulant du polymère,
   ■ des grains de polymère réticulés de granulométrie comprise entre 0,2 et 4 mm, les grains étant composés de copolymère acrylamide/acrylate,
- on injecte ledit fluide dans les zones à pertes avant qu'il y ait réticulation.

Dans une variante, on ajoute au fluide des particules colloïdales.

L'invention concerne également la composition du fluide colmatant.

## Description

Les pertes de fluide en cours de forage sont des problèmes récurrents sur une majorité des puits, même si les conséquences n'ont pas toutes le même degré de gravité. Les situations sont les plus problématiques lorsque les formations traversées par le forage sont naturellement fissurées. Dans ce cas, on se trouve souvent en situation de pertes totales de fluide, c'est-à-dire qu'aucun retour de boue de forage n'a lieu par l'annulaire. Un meilleur contrôle des pertes en cours de forage est particulièrement critique dans les champs où la différence entre la pression de pore de la formation et sa pression de fracturation ("Mud Weight Window") est très réduite. Il en est de même dans le cas de forage d'alternances de réservoirs vierges et de réservoirs fortement déplétés.

Il est connu, notamment par le document US-3909421, d'injecter dans un puits une solution à haute viscosité, sans réticulation, constituée à base d'un polymère et d'argile. Mais ces fluides visqueux sont difficiles à mettre en place dans les zones à pertes, et leur effet n'est pas constant.

On connaît aussi les documents US-3762476, ou US-3981363 qui décrivent des méthodes pour réduire la quantité d'eau produite par un puit en injectant séquentiellement une solution de polymère dans la roche, puis un agent réticulant par injection multiple, et parfois à nouveau une solution de polymère. Ces méthodes ne fournissent pas de solutions adaptées au colmatage des pertes en forage, notamment parce que le gel ne peut pas être suffisamment résistant et sa formation difficilement contrôlable.

Le document US-2002/0040812A1 décrit une méthode pour colmater les fractures en ajoutant au fluide de forage des grains de polymère réticulés pouvant gonfler de 25 à 300 fois au contact de l'eau, une fois dans les fractures. Cependant, ce document n'enseigne pas la formulation optimisée de la présente invention et ne présente pas tous ses avantages, notamment la consistance et la solidité du gel formé in situ, ainsi que la cinétique de gélification.

La présente invention décrit un nouveau système colmatant adapté aux contraintes drastiques rencontrées lors du forage de zones à pertes. Ce système est composé par la combinaison de trois éléments principaux, chacun des éléments apportant sa contribution aux propriétés recherchées, c'est à dire le colmatage des fractures d'une manière suffisamment durable pour la poursuite des opérations.

Ainsi, la présente invention concerne une méthode pour colmater des zones à pertes en cours de forage, dans laquelle on effectue les étapes suivantes:
- on prépare un fluide aqueux comprenant en solution:
   ■ un copolymère acrylamide/acrylate avec un taux d'hydrolyse compris entre 1 et 10% et une masse moléculaire comprise entre 10⁵ et 5 10⁶ g/mol,
   ■ une quantité utile de réticulant dudit polymère,
   ■ des grains de polymère réticulés de granulométrie comprise entre 0,2 et 4 mm, lesdits grains étant composés de copolymère acrylamide/acrylate partiellement hydrolysés à environ 10%, ramifiés, réticulés rigides ou élastiques,
- on injecte ledit fluide dans les zones à pertes avant qu'il y ait réticulation.

On peut ajouter au fluide des particules colloïdales choisies dans le groupe: argiles smectites, argiles sépiolites, carbonate de calcium, ou leurs mélanges.

La concentration en copolymère peut être comprise entre 10 et 70 g/l, et préférentiellement entre 30 et 50 g/l

La concentration des particules colloïdales peut être comprise entre 10 et 50 g/l.

Le réticulant peut être choisi parmi: l'acétate de chrome III et la polyéthylène-imine, dans une concentration variant entre 1/20ème et 1/1ème de la concentration en copolymère hydrolysé, et préférentiellement entre 1/10ème à 1/5^{ème}.

On peut choisir le taux d'hydrolyse dudit copolymère en fonction de la température du milieu dans lequel le copolymère réticule.

La concentration des grains de polymère réticulés peut être comprise entre 0,5 et 20 g/l.

L'invention concerne également une composition hydrosoluble comportant les matériaux suivants sous forme de particules solides:
■ un copolymère acrylamide/acrylate avec un taux d'hydrolyse compris entre 1 et 10% et une masse moléculaire comprise entre 10⁵ et 5 10⁶ g/mol,
■ une quantité utile de réticulant dudit polymère,
■ des grains de polymère réticulés de granulométrie comprise entre 0,2 et 4 mm, lesdits grains étant composés de copolymère acrylamide/acrylate partiellement hydrolysés à environ 10%, ramifiés, réticulés rigides ou élastiques.

La composition peut comporter les concentrations suivantes:
- entre 10 et 70 g/l de copolymère acrylamide/acrylate,
- une concentration en réticulant comprise entre 1/10 et 1/5 de la concentration en copolymère,
- entre 0,5 et 20 g/l de grains de polymère réticulés.

Les particules colloïdales choisies dans le groupe: argiles smectites, argiles sépiolites, carbonate de calcium, ou leurs mélanges, peuvent être en concentration comprise entre 10 et 20 g/l.

La composition peut comprendre environ:
- 50 g/l de copolymère acrylamide/acrylate,
- 5 g/l de réticulant,
- 50 g/l de particules colloïdales,
- entre 5 et 10 g/l de grains de polymère réticulés de granulométrie comprise entre 0,2 et 4 mm.

La présente invention sera mieux comprise et ses avantages apparaîtront plus clairement à la lecture de la description des exemples et essais, nullement limitatifs, ci-après décrits.

La présente invention est donc une formulation comprenant une base visqueuse V, un réticulant R de la base visqueuse, des particules colloïdales C, des grains de polymère réticulés P.

La base visqueuse V est préférentiellement une solution aqueuse d'un copolymère acrylamide/acrylate de masse moléculaire 5 10⁵ g/mol avec un taux d'hydrolyse d'environ 5%. Le taux d'hydrolyse peut varier entre 1 et 10% et la masse entre 10⁵ et 5 10⁶ g/mol. La concentration du polymère peut varier entre 10 et 70 g/l selon la masse moléculaire, et préférentiellement entre 30 et 50 g/l.

Le réticulant R peut être de l'acétate de chrome III, ou de la polyéthylène-imine et sera préférentiellement de l'acétate de chrome III. La concentration du réticulant peut varier entre 1/20^{ème} et 1/1^{ème} de la concentration en polymère hydrolysé, préférentiellement 1/10^{ème} à 1/5^{ème} pour l'acétate de chrome III.

Les particules colloïdales C sont préférentiellement des argiles smectites mais peuvent être remplacées par des argiles fibreuses de type sépiolite, ou un mélange des deux, ou un mélange de carbonate de calcium et de sépiolite ou de smectite. La concentration des particules colloïdales peut varier entre 10 et 50 g/l.

Les grains de polymère réticulés P proviennent de la synthèse de copolymères polyacrylate/acrylamide réticulés. Ils peuvent être de trois formes: polymères ramifiés, polymères réticulés rigides ou polymères réticulés élastiques. Les masses moléculaires des copolymères sont supérieures à 1 million de grammes par mole, et préférentiellement comprises entre 5 et 10 millions de g/mol. Le taux d'hydrolyse des copolymères est compris entre 5 et 20%, et préférentiellement égal à 10%. Les copolymères sont réticulés lors de la synthèse par un réticulant préférentiellement organique. La quantité de réticulant permet d'obtenir des gels qui sont soit élastiques soit rigides. Les gel obtenus sont alors broyés et séchés puis tamisés afin d'avoir différentes granulométries. Les granulométries de ces grains peuvent varier entre 0,2 et 4 mm. Les grains de polymères présentent la particularité de gonfler dans l'eau. Ainsi, une fois plongés dans l'eau, des grains de polymères réticulés rigides dont la granulométrie est comprise entre 1 et 4 mm gonflent jusqu'à des diamètres égaux à 3 cm. Le taux de gonflement des grains de polymère réticulés est de l'ordre de 10. Les mêmes grains, plongés dans une saumure comprenant 45 g/l de NaCl et 5 g/l de KCl, gonflent également : le diamètre maximal de gonflement est de l'ordre de 2 cm. La pression n'a aucune influence sur le gonflement des grains de polymère réticulés : le taux de gonflement des grains de polymère réticulés est identique à la pression atmosphérique et sous plusieurs dizaines de bar. Les grains préférentiellement utilisés sont les polymères réticulés rigides. La concentration en grains peut être comprise entre 0,5 et 20 g/l.

Une formulation A préférée est ainsi la suivante:
- 50 g/l de polymère acrylamide/acrylate de masse moléculaire 5 10⁵ g/mol avec un taux d'hydrolyse d'environ 5%;
- 5 g/l d'additif réticulant acétate de chrome;
- 50 g/l d'argile de type sépiolite;
- 5 g/l de grains, ou particules, de polymères réticulés rigides de granulométrie comprise entre 0,2 et 1 mm, fourni par la Société SNF Floerger (France).

Cette formulation est aisément préparée sous forme de mélange des différentes poudres ("dry-blend") des constituants, et conditionnée en sacs, ou en vrac, pour être transportée sur le site d'utilisation. En cas de besoin de colmatage, cette préparation peut être mélangée à une saumure, type eau de mer ou eau de gisement, afin d'être injectée par les pompes de forage.

La viscosité apparente, pour un taux de cisaillement de 100 s⁻¹ du fluide à l'injection, est comprise entre 100 mPa.s et 1000 mPa.s. Le rapport massique eau/poudres est environ de 9 pour la formulation préférée A.

A cette formulation A, on peut ajouter du lactate de sodium en proportion variable (par exemple, inférieure au double de la concentration en acétate de chrome III). La concentration en lactate de sodium peut être déterminée en fonction de la situation locale, afin de retarder le temps de prise (de réticulation) de l'agent colmatant. Pour un résultat équivalent en application haute température, on peut utiliser des polymères ayant des taux d'hydrolyse inférieurs à 5% (il y aura hydrolyse progressive avec la montée en température).

Les exemples suivants montrent l'efficacité de cette formulation et le rôle fonctionnel de chacun des éléments constitutifs.

Un matériau de colmatage dans le domaine des puits pétroliers doit avoir les caractéristiques suivantes:
- Facilité de pompage : la formulation doit pouvoir être injectée dans la zone désirée, sans problème spécifique, et selon les moyens et les règles de l'art. La viscosité du produit pendant le temps de circulation, donc avant prise, doit donc être suffisamment faible, et proche de ce qui est acceptable pour les fluides de forage ou les laitiers de cimentation;
- Temps de gélification : il doit être supérieur au temps de mise en place dans la zone de pertes (généralement compris entre 2 et 5h). Le temps de gélification de la formulation doit pouvoir être ajusté, soit par l'ajout d'un agent retardateur, soit par la modification du taux d'hydrolyse du polymère. Il n'est pas exclu de faire varier ces deux paramètres.
- Efficacité du colmatage : le gel doit posséder un module élastique suffisamment important et la contrainte seuil doit être élevée. Le critère discriminant est la résistance à une pression différentielle importante dans la fracture.
- Résistance aux sels, à la pression, à la température, et au pH de la formation rocheuse.

Différents tests ont été réalisés:
- Le suivi des modules élastiques et visqueux (G' et G") en fonction du temps donne une mesure de la cinétique de gélification.
- Le suivi de la viscosité apparente à 100 s⁻¹ donne également une mesure de la cinétique de gélification. Le temps à la rupture de la viscosité donne le temps de gélification de la formulation, ou temps caractéristique.
- La mesure de la contrainte maximale supportée par le colmatant après 3 heures de réticulation pour estimer sa capacité de résistance à des pressions différentielles une fois en place.

Ce protocole de préparation du fluide colmatant se décompose ainsi :
- pesée de 150 ml de liquide (eau distillée ou saumure), dans lesquels seront dispersés les constituants de la formule, avec une balance affichant une précision à ± 0.1 g;
- pesée séparée de chacun des éléments rentrant dans la composition de la formule, avec une balance affichant une précision à ± 0.1 mg;
- mise en place du récipient contenant le solvant sur un agitateur Hamilton Beach (HB), réglé à une vitesse de 11000 tr.min⁻¹. Introduction progressive des poudres de polymère, d'argile et des grains de polymère réticulé préalablement mélangées. Le début de l'introduction de ces particules dans le solvant est l'instant t = 0 min. La dispersion s'effectue avec un agitateur Hamilton Beach car ce mode d'agitation, normalisé par l'American Petroleum Institute (API), est le plus représentatif des conditions de préparation des fluides sur chantier;
- au temps t = 5 min, introduction progressive du réticulant;
- au temps t = 10 min, arrêt de l'agitation, puis mise en place de la solution formulée dans la cellule du rhéomètre;
- au temps t = 17 min, déclenchement des mesures sur le rhéomètre;

Les caractéristiques rhéologiques ont été mesurées sur un rhéomètre rotatif (Haake RS 150) équipé d'un bain thermo-régulé. Ce rhéomètre fonctionne soit en mode "contrainte imposée" soit en mode "vitesse de cisaillement imposée". Le rhéomètre Haake RS 150 doit sa grande sensibilité, entre autre, à son système de palier fluide (roulement à air) qui génère de faibles frottements assurant une caractérisation précise des microstructures sensibles et lui permettant d'atteindre des couples plus faibles que ceux atteints sur les rhéomètres à palier mécanique, ainsi qu'à son système de détection doté d'un processus digital d'un million d'impulsions par révolution qui lui confère une résolution telle que la mesure de très faibles contraintes ou de taux de cisaillement est rendue possible.

### - Spécifications techniques du rhéomètre RS 150 :

o gamme de couple : 0,2. 10⁻³ à 150 mN.m
o gamme de vitesse (à contrainte imposée) : 10⁻⁷ à 1000 tr.min⁻¹
o gamme de vitesse (à vitesse imposée) : 10⁻² à 1200 tr.min⁻¹
o gamme de fréquence : 10⁻⁴ à 100 Hz
o nombre d'impulsions : 10⁷
o résolution de la déformation : 6.10⁻⁷ rad

Trois géométries ont été utilisées pour les mesures :
- Géométrie à cylindres coaxiaux (Z40 DIN) avec un entrefer de 1,7 mm. Pour éviter les problèmes d'évaporation, un film d'huile a été déposé à la surface libre du fluide colmatant;
- Géométrie à ailettes (FL 16). On a eu recours, ici aussi, au dépôt d'un film d'huile sur la surface libre du fluide colmatant testé pour s'affranchir des phénomènes d'évaporation;
- Géométrie à cylindres coaxiaux fonctionnant en pression (PZ 36). Ce système se compose principalement de :
   o une section centrale d'enveloppe cylindrique sur laquelle est raccordée la valve d'arrivée de la pression et le manomètre,
   o une base à visser sur la section centrale, l'ensemble constituant alors le stator,
   o un rotor de même axe que la section centrale,
   o un aimant interne à visser sur le rotor,
   o un aimant externe à visser sur l'arbre de commande du rhéomètre,
   o un couvercle en acier inoxydable séparant les deux aimants,
   o et également de tout un assortiment d'éléments visant à garantir l'étanchéité de la cellule.

La prise magnétique, que forment les deux anneaux magnétiques, permet la transmission au rotor du mouvement de rotation. Le rotor est centré à chacune de ses extrémités par un système (épingle de centrage / bague de roulement en saphir) permettant de limiter les frottements avec les éléments (le couvercle et la base) à son contact.

### Données techniques de la cellule pression:

- Gamme de température de travail : de - 50°C à 200°C
- Pression limite à 200°C : 100 bars
- Pression limite à 20°C : 123,5 bars

Les protocoles de mesures sont les suivants :
- Systématiquement, toutes les mesures commencent par un cisaillement en régime permanent de 100 s⁻¹. Lors de ce cisaillement, la viscosité est mesurée en continu jusqu'à observer une très forte augmentation de la viscosité. La viscosité initiale du fluide colmatant ainsi que la cinétique de gélification sont ainsi déterminées;
- Une fois le fluide gélifié, un cisaillement oscillatoire de petite déformation est appliqué. Lors de ce cisaillement (également appelé balayage en temps), les modules de pertes et de conservation sont mesurés. Ce balayage en temps effectué sur le fluide juste après sa préparation permet de déterminer le temps de gélification Ce temps est défini comme le temps auquel le module de conservation devient supérieur au module de perte. Le balayage en temps effectué après le cisaillement permanent décrit ci-dessus permet de quantifier l'élasticité du gel formé et comment cette élasticité se développe au cours du temps. Dans ce second cas, le balayage en temps dure trois heures.
- La mesure de la contrainte à la rupture du gel s'effectue en appliquant un cisaillement du gel à vitesse de déformation constante. Pendant ce cisaillement, on enregistre la contrainte résultante en fonction du temps. La contrainte de cisaillement augmente linéairement dans les premiers instants, passe par un maximum avant de chuter pour se stabiliser à une valeur quasi constante. La contrainte à la rupture du gel est définie comme la valeur de la contrainte au niveau du pic.

Après gélification (réticulation) de la formulation colmatante, une mesure de la contrainte maximale supportée par le gel donne une mesure de la contrainte à la rupture, ainsi qu'une estimation du gradient de pression maximal ΔP/L supporté par le gel en place dans une fracture. En effet, en supposant une fracture d'épaisseur **w,** et **τ**_{**s**} la contrainte à la rupture du gel colmatant pris dans la fracture, un calcul simple montre que **τ**_{**s**} est relié au gradient de pression maximal supporté par le gel par: τₛ = (ΔP/L) • w/2.

### Système 1:

### Base visqueuse 50 g/l:

| Réticulant 5 g/l: | | |
|---|---|---|
| à 60 °C | Temps caractéristique de gélification | 10 minutes |
| | Contrainte à la rupture | 1320 Pa |

### Système 2:

| Système1+ argile sépiolite (50 g/l): | | |
|---|---|---|
| à 60°C | Temps caractéristique de gélification | 12 minutes |
| | Contrainte à la rupture | 2600 Pa |

Le temps de gélification n'est pas sensiblement modifié par l'ajout d'argile. Par contre, la contrainte à la rupture est largement augmentée par l'ajout d'argile au système:

### Système 3:

| Système2 + grains réticulés (10 g/l) : | | |
|---|---|---|
| à 60°C | Temps caractéristique de gélification | 15 minutes |
| | Contrainte à la rupture | 5000 Pa |

Le temps de gélification est très peu modifié par l'ajout des grains réticulés. Par contre, la contrainte à la rupture est largement augmentée par l'ajout de grains réticulés au système.

### Effet du sel:

Le système 3, mais avec 5 g/l de grains de polymère réticulé, a été testé dans de l'eau distillée:

| | |
|---|---|
| Temps caractéristique de gélification | 15 minutes |
| Contrainte à la rupture | 3020±120 Pa |

- dans de l'eau de mer:

| | |
|---|---|
| Temps caractéristique de gélification | 15 minutes |
| Contrainte à la rupture | 2830±190 Pa |

### Effet de la pression, formulation 2:

- A la pression atmosphérique: Temps de gélification: 13 minutes
- A la pression de 50 bar: Temps de gélification: 12 minutes

La présence du sel ou de pression n'a pas d'effet significatif sur ces caractéristiques comme l'ont montré des tests réalisés au laboratoire.

Il faut noter, que pour une fracture de 1 millimètre d'épaisseur, une contrainte à la rupture de 5000 Pa représente un gradient de pression différentielle maximale de 100 bar/mètre.

## Revendications

1. Méthode pour colmater des zones à pertes en cours de forage, dans laquelle on effectue les étapes suivantes:
- on prépare un fluide aqueux comprenant en solution:
■ un copolymère acrylamide/acrylate avec un taux d'hydrolyse compris entre 1 et 10% et une masse moléculaire comprise entre 10⁵ et 5 10⁶ g/mol,
■ une quantité utile de réticulant dudit polymère,
■ des grains de polymère réticulés de granulométrie comprise entre 0,2 et 4 mm, lesdits grains étant composés de copolymère acrylamide/acrylate partiellement hydrolysés à environ 10%, ramifiés, réticulés rigides ou élastiques,
- on injecte ledit fluide dans les zones à pertes avant qu'il y ait réticulation.

2. Méthode selon la revendication 1, dans laquelle on ajoute audit fluide des particules colloïdales choisies dans le groupe: argiles smectites, argiles sépiolites, carbonate de calcium, ou leurs mélanges.

3. Méthode selon l'une des revendications 1 ou 2, dans laquelle la concentration en copolymère est comprise entre 10 et 70 g/l, et préférentiellement entre 30 et 50 g/l

4. Méthode selon l'une des revendications précédentes, dans laquelle la concentration des particules colloïdales est comprise entre 10 et 50 g/l.

5. Méthode selon l'une des revendications précédentes, dans laquelle le réticulant est choisi parmi: l'acétate de chrome III et la polyéthylène-imine, dans une concentration variant entre 1/20ème et 1/1ème de la concentration en copolymère hydrolysé, et préférentiellement entre 1/10ème à 1/5^{ème}.

6. Méthode selon l'une des revendications précédentes, dans laquelle on choisi le taux d'hydrolyse dudit copolymère en fonction de la température du milieu dans lequel le copolymère réticule.

7. Méthode selon l'une des revendications précédentes, dans laquelle la concentration des grains de polymère réticulés est comprise entre 0,5 et 20 g/l.

8. Composition hydrosoluble comportant les matériaux suivants sous forme de particules solides:
■ un copolymère acrylamide/acrylate avec un taux d'hydrolyse compris entre 1 et 10% et une masse moléculaire comprise entre 10⁵ et 5 10⁶ g/mol,
■ une quantité utile de réticulant dudit polymère,
■ des grains de polymère réticulés de granulométrie comprise entre 0,2 et 4 mm, lesdits grains étant composés de copolymère acrylamide/acrylate partiellement hydrolysés à environ 10%, ramifiés, réticulés rigides ou élastiques.

9. Composition selon la revendication 8, comportant les concentrations suivantes:
- entre 10 et 70 g/l de copolymère acrylamide/acrylate,
- une concentration en réticulant comprise entre 1/10 et 1/5 de la concentration en copolymère,
- entre 0,5 et 20 g/l de grains de polymère réticulés.

10. Composition selon la revendication 9, dans laquelle des particules colloïdales choisies dans le groupe: argiles smectites, argiles sépiolites, carbonate de calcium, ou leurs mélanges, sont en concentration comprise entre 10 et 20 g/l.

11. Composition selon l'une des revendications 8 à 10, comprenant environ:
- 50 g/l de copolymère acrylamide/acrylate,
- 5 g/l de réticulant,
- 50 g/l de particules colloïdales,
- entre 5 et 10 g/l de grains de polymère réticulés de granulométrie comprise entre 0,2 et 4 mm.
